# EUROPEAN PATENT SPECIFICATION

(11) **EP 3 628 844 B1**
(45) Date of publication and mention of the grant of the patent: **06.11.2024**
(21) Application number: 19199700.6
(22) Date of filing: 25.09.2019
(51) Int. Cl.: F02C 7/18

(54) **ADDITIVELY MANUFACTURED COMPONENT**
GENERATIVE FERTIGBARES BAUTEIL
COMPOSANT DE FABRICATION ADDITIVE

(30) Priority: 26.09.2018 US 201816142579
(43) Date of publication of application: 01.04.2020
(73) Proprietor: GE Aviation Systems LLC, Grand Rapids, MI 49512 (US)
(72) Inventor: SEBASTIAN, Merin, Grand Rapids, MI Michigan 49512 (US); MAHLE, James Patrick, Grand Rapids, MI Michigan 49512 (US); YAO, Qizhou Matthew, Grand Rapids, MI Michigan 49512 (US); RALLABANDI, Indira Priyadarsini, Grand Rapids, MI Michigan 49512 (US); MAHADEVAIAH, Narendra Dev, Grand Rapids, MI Michigan 49512 (US); HUANG, Hao, Grand Rapids, MI Michigan 49512 (US)
(74) Representative: Openshaw & Co.

(56) References cited:
- WO-A1-2017/165921
- JP-A- H08 226 782
- US-A- 3 692 104
- US-B1- 6 288 895
- ANONYMOUS: "Promoting Powder Metallurgy Technology INTRODUCTION TO ADDITIve MANUfACTURINg TeCHNOLOgY", 1 April 2013 (2013-04-01), XP055295594, Retrieved from the Internet <URL:http://www.sf2m.asso.fr/CommissionsThematiques/DocComThematiques/EPMA_Additive_Manufacturing.pdf> [retrieved on 20160816]

## Description

### TECHNICAL FIELD

This disclosure relates to an apparatus comprising a conduit and more specifically to a support structure with thermally conductive support members incorporated therein.

### BACKGROUND

Additive manufacturing processes or systems can be used to print or build three-dimensional parts or components from digital models, which can be beneficial for rapid prototyping and manufacturing. During manufacture of the component, support structures may be included within the part to provide added rigidity for partially-formed portions. Such support structures are typically removed from the completed component after manufacture. In some cases the completed component can fully enclose an interior space, where removal of interior support structures can be difficult, impractical or even impossible.

WO 2017/165921 A1 discloses a heat exchanger that has a plurality of sets of fluid channels, each fluid channel having first and second end portions and an intermediate portion between the first and second end portions. US 6 288 895 B1 discloses a heat generating component such as a microprocessor in a small form factor, or a low profile electronic device, e.g. a laptop computer, being cooled by using an elongated hollow heat exchanger with a fan at one end of the heat exchanger. US 3 692 104 A discloses a thermoconductive fluid-confining tube having a plurality of thermoconductive elements each having opposed major surfaces. JP H08 226782 A discloses providing a large number of slit holes, in the vicinity of an end face located in an upstream side of air flow, in a line along the end face of a fin and spaced apart by a specified distance from each other.

### BRIEF DESCRIPTION

The invention is defined by the appended claims. Claim 1 is directed at an additively manufactured heat-carrying component. In the following, apparatus and/or methods referred to as embodiments that nevertheless do not fall within the scope of the claims should be understood as examples useful for understanding the invention.

### BRIEF DESCRIPTION OF THE DRAWINGS

In the drawings:
FIG. 1 is a schematic isometric view of a turbine engine with a heat-carrying component in the form of an accessory gearbox according to various aspects described herein.
FIG. 2 is a cross-sectional view of the accessory gearbox of FIG. 1 with a support structure according to various aspects described herein.
FIG. 3 is an enlarged view of a portion of the accessory gearbox of FIG. 2.
FIG. 4 is cross-sectional view of a conduit in the accessory gearbox of FIG. 1 and the additive support structure of FIG. 2.

### DETAILED DESCRIPTION

Aspects of the present disclosure relate to a heat-carrying component, and examples of such a component are described herein in the context of a turbine engine and gearbox. It will be understood that the disclosure may have general applicability within an engine, including turbines and compressors and non-airfoil engine components, as well as in non-aircraft applications, such as other mobile applications and non-mobile industrial, commercial, and residential applications.

All directional references (e.g., radial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order, and relative sizes reflected in the drawings attached hereto can vary.

As used herein, the term "forward" or "upstream" refers to moving in a direction toward the engine inlet, or a component being relatively closer to the engine inlet as compared to another component. The term "aft" or "downstream" refers to a direction toward the rear or outlet of the engine relative to the engine centerline. Additionally, as used herein, the terms "radial" or "radially" refer to a dimension extending between a center longitudinal axis of the engine and an outer engine circumference. It should be further understood that "a set" can include any number of the respectively described elements, including only one element.

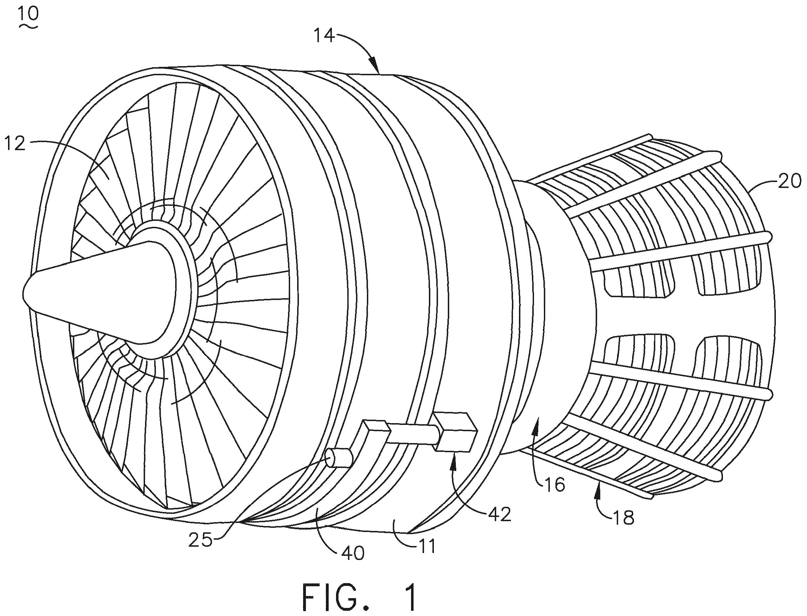

An exemplary turbine engine 10 is illustrated in FIG. 1. The turbine engine 10 can be a gas turbine engine, including a turbofan, turboprop, or turboshaft engine in non-limiting examples. The turbine engine 10 can include an air intake with a fan 12 that supplies air to a high pressure compression region 14. The air intake with a fan 12 and the high pressure compression region 14 collectively are known as the 'cold section' of the turbine engine 10 upstream of the combustion. It is also contemplated that multiple high pressure compression regions can be provided in the turbine engine 10.

The high pressure compression region 14 provides a combustion chamber 16 with high pressure air. In the combustion chamber 16, the high pressure air is mixed with fuel and combusted. The hot and pressurized combusted gases pass through a high pressure turbine region 18 and a low pressure turbine region 20 before exhausting from the turbine engine 10.

As the pressurized gases pass through the high pressure turbine (not shown) of the high pressure turbine region 18 and the low pressure turbine (not shown) of the low pressure turbine region 20, the turbines extract rotational energy from the flow of the gases passing through the turbine engine 10. The high pressure turbine of the high pressure turbine region 18 can be coupled to the compression mechanism (not shown) of the high pressure compression region 14 by way of a shaft to power the compression mechanism. The low pressure turbine can be coupled to the fan 12 of the air intake by way of a shaft to power the fan 12. The turbine engine can also have an afterburner that burns an additional amount of fuel downstream of the low pressure turbine region 20 to increase the velocity of the exhausted gases, and thereby increasing thrust. In this manner the turbine engine 10 can include at least a compressor, combustor, and turbine in axial flow arrangement.

An air turbine starter or generator 25 can be mounted to the turbine engine 10. An accessory gearbox (AGB) 40, also referred to herein as "gearbox 40," can be coupled to the generator 25 and mounted to the turbine engine 10. Together, the generator 25 and gearbox 40 can define an assembly which is commonly referred to as an Integrated Starter/Generator Gearbox (ISGB) 44.

The generator 25 and gearbox 40 can be selectively operably coupled with the turbine engine 10 at either the high pressure or low pressure turbine region 18, 20 by way of a mechanical power take-off 42. The mechanical power take-off 42 contains multiple gears and means for mechanical coupling of the gearbox 40 to the turbine engine 10. Under normal operating conditions, the power take-off 42 translates power from the turbine engine 10 to the gearbox 40 to power accessories of the aircraft for example but not limited to fuel pumps, electrical systems, and cabin environment controls. The generator 25 can be mounted on the outside of either the air intake region containing the fan 12 or on the core near the high pressure compression region 18.

The turbine engine 10 can include at least one heat-carrying component 50 (also referred to herein as "component 50"). According to the invention, the heat-carrying component 50 is an additively manufactured component. As used herein, an "additively manufactured" component will refer to a component formed by an additive manufacturing (AM) process, wherein the component is built layer-by-layer by successive deposition of material. AM is an appropriate name to describe the technologies that build 3D objects by adding layer-upon-layer of material, whether the material is plastic or metal. AM technologies can utilize a computer, 3D modeling software (Computer Aided Design or CAD), machine equipment, and layering material. Once a CAD sketch is produced, the AM equipment can read in data from the CAD file and lay down or add successive layers of liquid, powder, sheet material or other material, in a layer-upon-layer fashion to fabricate a 3D object. It should be understood that the term "additive manufacturing" encompasses many technologies including subsets like 3D Printing, Rapid Prototyping (RP), Direct Digital Manufacturing (DDM), layered manufacturing and additive fabrication. Non-limiting examples of additive manufacturing that can be utilized to form an additively-manufactured component include powder bed fusion, vat photopolymerization, binder jetting, material extrusion, directed energy deposition, material jetting, or sheet lamination.

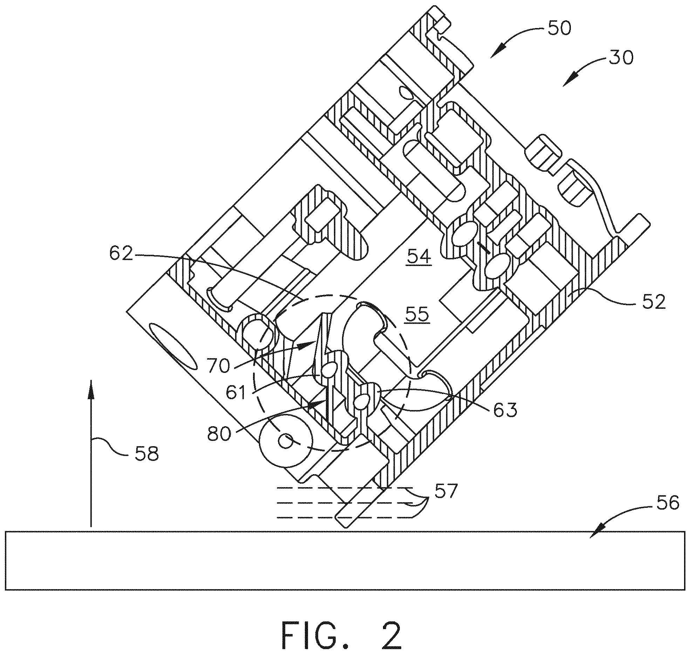

Turning to FIG. 2, one example of such an additively-manufactured heat-carrying component 50 is illustrated in the form of a generator housing 30 for the generator 25 of FIG. 1. It is contemplated that other portions of the generator 25 not shown can also be formed by additive manufacturing such that the generator 25 itself can be an additively-manufactured component. It is further contemplated that any component within the turbine engine 10 can be additively manufactured, and that aspects of the present disclosure can have general applicability to any additively-manufactured component or heat-carrying component formed by a variety of manufacturing methods such as casting, including in non-engine environments.

The completed additively-manufactured generator housing 30 is illustrated in a cross-sectional view. An exemplary base plate 56 is shown beneath the generator housing 30 that can be utilized during an additive manufacturing process to form the generator housing 30. The generator housing 30 can be built or printed layer-by-layer, illustrated with exemplary layers 57 intersecting the completed generator housing 30 wherein successive layers 57 are added in a direction illustrated by a direction arrow 58. It should be understood that other components such as exterior supporting arms, a printing head, and the like can be utilized during the additive manufacturing process and are omitted for clarity.

The generator housing 30 includes an outer casing 52 bounding an interior 54. It can also be appreciated that the outer casing 52 of the completed generator housing 30 can define an exteriorly inaccessible portion 55 (also referred to herein as "inaccessible portion 55") within the interior 54. As used here, an "exteriorly inaccessible portion" of a component will refer to a portion that cannot be accessed from outside the component, such as by hand and/or with tools, for performing operations such as machining or assembly within the component. Such an exteriorly inaccessible portion can also be fluidly separated from the exterior of the component, such as being airtight or watertight, although this need not be the case. In addition, while the outer casing 52 is illustrated as rectangular or box-like, it is also contemplated that the outer casing 52 can be curved to match an exterior surface 11 of the turbine engine 10 (FIG. 1).

At least one conduit 61 is located within the interior 54, and at least a portion 60 of the conduit 61 can be located within the inaccessible portion 55. The conduit 61 can be configured to direct fluids or coolant, including oil, through the generator 25 during operation of the turbine engine 10. The conduit 61 is unitarily formed with the outer casing 52.

It can be appreciated that support structures can be utilized to support various components within the generator housing 30, including during additive manufacture of the generator housing 30. For example, the use of such support structures can prevent shifting or other undesired movement of components within the outer casing 52 during manufacture or during operation of the turbine engine 10. One such example is illustrated as a first additive support structure 70 supporting the conduit 61. The first additive support structure 70 is coupled to, or unitarily formed with, the conduit 61 as shown. The first additive support structure 70 can have any desired shape, size, or thickness. The generator housing 30 is formed by additive manufacturing, and the generator housing 30 includes a monolithic body having the outer casing 52, the conduit 61, and a support structure such as the first additive support structure 70.

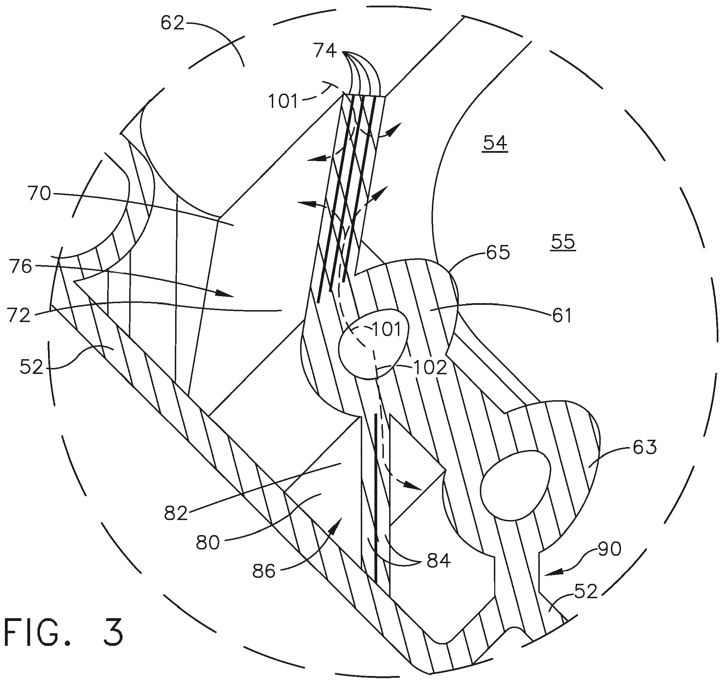

FIG. 3 illustrates a portion of the generator housing 30 in further detail. The first additive support structure 70 further includes at least two thermally-conductive support members 72 supporting the conduit 61 during the additive manufacturing process. The support members 72 are spaced apart to define at least two fins 74 which collectively form a heat exchanger 76 thermally coupled to the conduit 61.

A second conduit 62 similar to the conduit 61 is also coupled to the first additive support structure 70. More specifically, the second conduit 62 is thermally coupled to the fins 74 of the heat exchanger 76 defined by the first additive support structure 70.

In addition, a second additive support structure 80 similar to the first additive support structure 70 is illustrated between the outer casing 52 and the conduit 61. It is contemplated that the second additive support structure 80 can also define a second heat exchanger 86 similar to the heat exchanger 76 and having a plurality of fins 84. The fins 84 can be thermally coupled to both the outer casing 52 and the conduit 61 as shown. In this manner, a single conduit within the generator housing 30 can have multiple heat exchangers formed by corresponding multiple support structures as desired.

In still another example, a third additive support structure 90 similar to the additive support structure 70 can be coupled to a third conduit 63 and the outer casing 52. It will be understood that a plurality of additive support structures can be utilized within the generator housing 30 and coupled between conduits, or coupled between a conduit and the outer casing, or coupled to any component within the generator housing 30, in non-limiting examples.

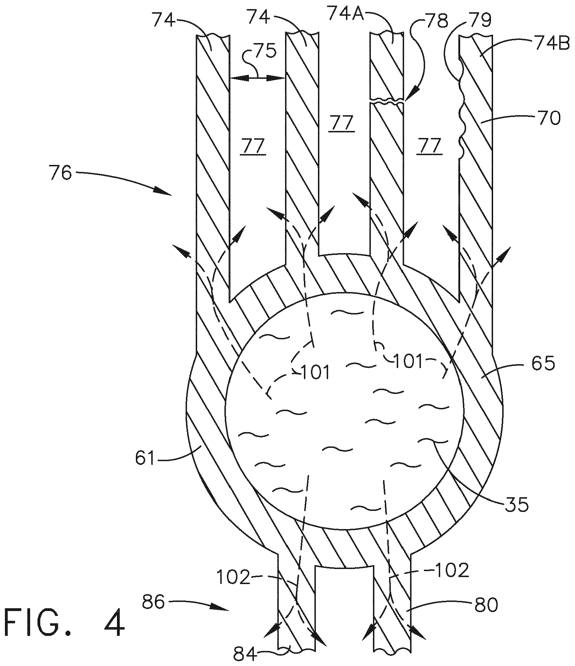

Turning to FIG. 4, a cross-sectional view illustrates the conduit 61 and first and second additive support structures 70, 80 as well as a heat-carrying fluid 35 within the conduit 61. It is further contemplated that the conduit 61 can include an additively-manufactured monolithic conduit wall 65 having the heat exchanger 76 including the fins 74. Adjacent fins 74 can be spaced apart by a distance 75 to define a cooling channel 77 therebetween. In addition, the monolithic conduit wall 65 can also include the second additive support structure 80 with the heat exchanger 86 and fins 84.

It is also contemplated that the fins 74 can include cooling enhancement structures configured to improve cooling performance of the heat exchanger 76. One cooling enhancement structure is illustrated in the form of an aperture or hole 78 through a first fin 74A, where air in adjacent cooling channels 77 can flow through the first fin 74A to increase a rate of heat transfer from the first fin 74A. Another cooling enhancement structure is illustrated in the form of dimples 79 in the surface of a second fin 74B. Such dimples 79 can increase the surface area of the second fin 74B and increase a rate of heat transfer from the fin 74B as compared to a smooth fin 74. Other cooling enhancement structures can be in the form of local surface roughness, latticed structures, or cutouts can be included in any of the additive support structures 70, 80 forming the heat exchangers 76, 86.

During operation, heat-carrying fluid 35 such as oil can flow through any or all of the conduits 61, 62, 63. In one example, a first heat-carrying fluid can flow through the conduit 61 while additional or second heat-carrying fluid flows through the second conduit 62. In another example, the same heat-carrying fluid can flow through all of the conduits 61, 62, 63.

Arrows 101 (FIGS. 3-4) illustrate a conductive transfer of heat from the heat-carrying fluid 35 in contact with the conduit wall 65, from the conduit wall 65 to the fins 74 of the heat exchanger 76, and from the fins 74 to air within the cooling channel 77. Heat can transfer similarly from the second conduit 62 (FIG. 3) to the fins 74 and cooling channel 77. With regard to the second heat exchanger 86, it is further contemplated that heat illustrated by arrows 102 (FIGS. 3-4) can transfer from the third conduit 63 to the outer casing 52 or air within the interior 54 via the second additive support structure 80 and fins 84. In this manner an additive support structure, such as the first or second additive support structures 70, 80 in the form of the respective heat exchangers 76, 86 can be configured to transfer heat away from any or all of the conduits 61, 62, 63, including moving heat away from heat-carrying fluid 35 such as oil that may be flowing within the conduits 61, 62, 63.

It can be appreciated that heat can also transfer away from the interior 54 of the generator housing 30 via the outer casing 52. In another example, a plurality of vent holes (not shown) can be provided in the outer casing 52 to facilitate the transfer of heat from the interior 54 of the generator housing 30. Such vent holes can be integrally formed with the outer casing 52, and can be of a size that does not permit access to the interior 54 with tools or other devices while permitting air to flow into or out of the interior 54.

Aspects of the present disclosure provide for a method of cooling a monolithic heat-carrying component such as the component 50 having the outer casing 52 bounding the interior 54. The method can include moving heat-carrying fluid 35 through a conduit, such as the conduit 61, 62, 63, located within the interior 54 and unitarily formed with the outer casing 52. The method can also include transferring heat from the heat-carrying fluid 35 to an additively-manufactured support structure, such as the first or second additive support structures 70, 80 (FIG. 3) having the at least two spaced fins 74, 84 collectively forming the heat exchanger 76, 86, wherein the additively-manufactured support structures 70, 80 are located within the interior 54 or the exteriorly inaccessible portion 55. Optionally, the method can include conducting heat from the heat-carrying fluid 35 to a conduit wall, such as the conduit wall 65 thermally coupled to the first additive support structure 70. The method can also optionally include conducting heat from the heat-carrying fluid 35 to the outer casing 52 via the second additive-manufactured support structure 80 as seen in FIG. 3. The method can optionally further include moving additional heat-carrying fluid 35 through the second conduit 62 thermally coupled to the heat exchanger 76, and transferring heat away from each of the conduit 61 and second conduit 62 via the heat exchanger 76 as shown in FIG. 3. The method can optionally further include transferring heat from the fins 74 to air flowing between the fins 74 as shown in FIG. 4.

The above described aspects provide for a variety of benefits. For power generator parts manufactured by additive printing technology, support structures utilized within exteriorly inaccessible spaces during printing cannot be removed (e.g. machined out). The use of fins as support structures can reduce the weight of the additively-manufactured component while adding improved functionality such as cooling, which can increase performance or efficiency during operation of the additively-manufactured component. In addition, the improved ability to cool such exteriorly inaccessible regions can increase the working lifetime of the part.

This written description uses examples to disclose aspects of the invention, including the best mode, and also to enable any person skilled in the art to practice aspects of the invention, including making and using any devices or systems and performing any incorporated methods. The patentable scope of the invention is defined by the claims, and can include other examples that occur to those skilled in the art.

## Claims

1. An additively manufactured heat-carrying component (50), comprising:
an outer casing (52) bounding an interior (54);
a conduit (61, 62, 63) located within the interior (54);
a support structure (70, 80, 90) located within the interior (54) and having at least two thermally-conductive support members (72, 82) supporting the first conduit (61, 62, 63), with the at least two support members (72, 82) being spaced apart to define at least two fins (74, 74A, 74B, 84) which collectively form a heat exchanger (76, 86) thermally coupled to the conduit (61, 62, 63); and
a second conduit (61, 62, 63) spaced from the first conduit and located within the interior, the second conduit being thermally coupled to the at least two fins (74, 74A, 74B, 84) of the heat exchanger (76, 86),
wherein the component comprises a monolithic body having the outer casing (52), the first and second conduits (61, 62, 63), and the support structure (70, 80, 90)..

2. The additively manufactured heat-carrying component (50) of claim 1 wherein the at least two fins (74, 74A, 74B, 84) further include cooling enhancement structures.

3. The additively manufactured heat-carrying component (50) of claim 2 wherein the cooling enhancement structures comprise at least one of holes (78) or dimples (79).

4. The additively manufactured heat-carrying component (50) of any of claims 1-3 wherein the conduit (61, 62, 63) further comprises an additively-manufactured monolithic conduit wall (65) having the heat exchanger (76, 86).

5. The additively manufactured heat-carrying component (50) of any of claims 1-4, further comprising a second support structure (70, 80, 90) thermally conductively coupled to the outer casing (52).

6. The additively manufactured heat-carrying component (50) of any of claims 1-5 wherein the heat exchanger (76, 86) is configured to transfer heat from the conduit (61, 62, 63) to the outer casing (52).

7. The additively manufactured heat-carrying component (50) of any of claims 1-6 wherein the component (50) comprises a turbine engine generator (30).

8. The additively manufactured heat-carrying component (50) of claim 7 wherein the conduit (61, 62, 63) is configured to direct coolant through the turbine engine generator (30), and wherein the support structure (70, 80, 90) is configured to move heat away from the coolant.

## Patentansprüche

1. Additiv gefertigte wärmetragende Komponente (50), umfassend:
ein Außengehäuse (52), das einen Innenraum (54) begrenzt;
eine Leitung (61, 62, 63), die sich innerhalb des Innenraums (54) befindet;
eine Stützstruktur (70, 80, 90), die sich innerhalb des Innenraums (54) befindet und mindestens zwei thermisch leitende Stützelemente (72, 82) aufweist, die die erste Leitung (61, 62, 63) stützen, wobei die mindestens zwei Stützelemente (72, 82) beabstandet sind, um mindestens zwei Rippen (74, 74A, 74B, 84) zu definieren, die gemeinsam einen Wärmetauscher (76, 86) ausbilden, der mit der Leitung (61, 62, 63) thermisch gekoppelt ist; und
eine zweite Leitung (61, 62, 63), die von der ersten Leitung beabstandet ist und sich innerhalb des Innenraums befindet, wobei die zweite Leitung mit den mindestens zwei Rippen (74, 74A, 74B, 84) des Wärmetauschers (76, 86) thermisch gekoppelt ist,
wobei die Komponente einen monolithischen Körper umfasst, der das Außengehäuse (52), die ersten und zweiten Leitungen (61, 62, 63) und die Stützstruktur (70, 80, 90) aufweist.

2. Additiv gefertigte wärmetragende Komponente (50) nach Anspruch 1, wobei die mindestens zwei Rippen (74, 74A, 74B, 84) ferner kühlungsverbessernde Strukturen einschließen.

3. Additiv gefertigte wärmetragende Komponente (50) nach Anspruch 2, wobei die kühlungsverbessernden Strukturen mindestens eines von Löchern (78) oder Vertiefungen (79) umfassen.

4. Additiv gefertigte wärmetragende Komponente (50) nach einem der Ansprüche 1 bis 3, wobei die Leitung (61, 62, 63) ferner eine additiv gefertigte monolithische Leitungswand (65) umfasst, die den Wärmetauscher (76, 86) aufweist.

5. Additiv gefertigte wärmetragende Komponente (50) nach einem der Ansprüche 1 bis 4, ferner umfassend eine zweite Stützstruktur (70, 80, 90), die mit dem Außengehäuse (52) thermisch leitend verbunden ist.

6. Additiv gefertigte wärmetragende Komponente (50) nach einem der Ansprüche 1 bis 5, wobei der Wärmetauscher (76, 86) konfiguriert ist, um Wärme von der Leitung (61, 62, 63) auf das Außengehäuse (52) zu übertragen.

7. Additiv gefertigte wärmetragende Komponente (50) nach einem der Ansprüche 1 bis 6, wobei die Komponente (50) einen Turbinentriebwerkgenerator (30) umfasst.

8. Additiv gefertigte wärmetragende Komponente (50) nach Anspruch 7, wobei die Leitung (61, 62, 63) konfiguriert ist, um Kühlmittel durch den Turbinentriebwerkgenerator (30) zu leiten, und wobei die Stützstruktur (70, 80, 90) konfiguriert ist, um Wärme von dem Kühlmittel wegzuführen.

## Revendications

1. Composant caloporteur fabriqué de manière additive (50), comprenant :
un boîtier extérieur (52) délimitant un intérieur (54) ;
un conduit (61, 62, 63) situé à l'intérieur (54) ;
une structure de support (70, 80, 90) située à l'intérieur (54) et ayant au moins deux éléments de support thermoconducteurs (72, 82) supportant le premier conduit (61, 62, 63), les au moins deux éléments de support (72, 82) étant espacés pour définir au moins deux ailettes (74, 74A, 74B, 84) qui forment collectivement un échangeur de chaleur (76, 86) couplé thermiquement au conduit (61, 62, 63) ; et
un second conduit (61, 62, 63) espacé du premier conduit et situé à l'intérieur, le second conduit étant couplé thermiquement aux au moins deux ailettes (74, 74A, 74B, 84) de l'échangeur de chaleur (76, 86),
dans lequel le composant comprend un corps monolithique avec l'enveloppe extérieure (52), le premier et le second conduits (61, 62, 63), et la structure de support (70, 80, 90).

2. Composant caloporteur de manière additive (50) selon la revendication 1, dans lequel les au moins deux ailettes (74, 74A, 74B, 84) comportent en outre des structures d'amélioration du refroidissement.

3. Composant caloporteur fabriqué de manière additive (50) selon la revendication 2, dans lequel les structures d'amélioration de refroidissement comprennent au moins l'un des trous (78) ou des fossettes (79).

4. Composant caloporteur fabriqué de manière additive (50) selon l'une quelconque des revendications 1 à 3, dans lequel le conduit (61, 62, 63) comprend en outre une paroi de conduit monolithique fabriquée additivement (65) ayant l'échangeur de chaleur (76, 86).

5. Composant caloporteur fabriqué de manière additive (50) selon l'une quelconque des revendications 1 à 4, comprenant en outre une seconde structure de support (70, 80, 90) couplée thermiquement au boîtier extérieur (52).

6. Composant caloporteur fabriqué de manière additive (50) selon l'une quelconque des revendications 1 à 5, dans lequel l'échangeur de chaleur (76, 86) est configuré pour transférer la chaleur du conduit (61, 62, 63) au boîtier extérieur (52).

7. Composant caloporteur fabriqué de manière additive (50) selon l'une quelconque des revendications 1 à 6, dans lequel le composant (50) comprend un générateur de moteur à turbine (30).

8. Composant caloporteur fabriqué de manière additive (50) selon la revendication 7, dans lequel le conduit (61, 62, 63) est conçu pour diriger le liquide de refroidissement à travers le générateur du moteur à turbine (30), et dans lequel la structure de support (70, 80, 90) est conçue pour éloigner la chaleur du liquide de refroidissement.
